# EUROPEAN PATENT SPECIFICATION

(11) **EP 2 625 010 B1**
(45) Date of publication and mention of the grant of the patent: **22.06.2016**
(21) Application number: 11831720.5
(22) Date of filing: 07.10.2011
(51) Int. Cl.: B26B 15/00, B23D 29/02, B23D 29/00, B26D 1/26

(54) **POWERED CUTTING TOOL**
STROMGETRIEBENES SCHNEIDEWERKZEUG
OUTIL DE COUPE ÉLECTRIQUE

(30) Priority: 11.04.2011 US 201161474062 P; 10.01.2011 US 201161431099 P; 08.10.2010 US 391170 P
(43) Date of publication of application: 14.08.2013
(73) Proprietor: Milwaukee Electric Tool Corporation, Brookfield, WI 53005 (US)
(72) Inventor: WINKEL, Steven, N., Kewaskum, WI 53040 (US); THORSON, Troy, C., Waukesha, WI 53186 (US); GEHRING, Todd, M., Hartland, WI 53029 (US)
(74) Representative: Kenrick, Mark Lloyd
(86) International application number: PCT/US2011/055465
(87) International publication number: WO 2012/048286

(56) References cited:
- EP-A1- 2 158 805
- DE-A1- 3 424 356
- DE-U1-202004 001 665
- JP-U- H0 324 067
- US-A- 3 408 875
- US-A- 4 178 682
- US-A- 5 901 447
- US-A1- 2002 197 123
- US-A1- 2007 261 252
- US-A1- 2008 161 150
- US-A1- 2010 064 527
- US-B1- 6 178 643

## Description

### FIELD OF THE INVENTION

The present invention relates to power tools, and more particularly to battery- powered cutting tools.

### BACKGROUND OF THE INVENTION

Non-powered cable-cutting tools typically include opposed cutting blades attached to respective elongated handles. The blades are pivotably attached, such that squeezing the handles together results in progressive closing of the gap between the cutting blades to cut a cable positioned between the blades. Such non-powered cable-cutting tools may be difficult to use with some materials or cable sizes due to insufficient leverage provided by the handles to ensure a complete and straight cut. Such non-powered cable-cutting tools may also be difficult to use for some individuals lacking sufficient wrist strength to generate enough force on the handles to cut a particular size or material of cable.

U.S. Patent No. 3,408,875 relates to a power-operated tool comprising a stationary member, a housing, a pivotally mounted movable member, said moveable member being arranged for engagement with said stationary member. The tool further comprises a motor, drive means connecting said motor with said movable member, cam means in said housing associated with said drive means, and means for indexing said cam means for imposing a reciprocating motion upon said movable member.

### SUMMARY OF THE INVENTION

The invention provides, in one aspect, a cutting tool including a housing and a pair of cutting blades at least partially extending from the housing. At least a first of the cutting blades is movable. The cutting tool also includes a drive mechanism including a cam and a ratchet mechanism. At least a portion of the ratchet mechanism is drivably coupled to the first cutting blade. The cutting tool further includes a motor for providing torque to the cam to actuate the ratchet mechanism.

Other features and aspects of the invention will become apparent by consideration of the following detailed description and accompanying drawings.

### BRIEF DESCRIPTION OF THE DRAWINGS

FIG. 1 is a perspective view of a cutting tool according to a construction of the invention.
FIG. 2 is an exploded, front perspective view of the cutting tool of FIG. 1.
FIG. 3 is a cutaway perspective view of the cutting tool of FIG. 1.
FIG. 4 is a partial cross-sectional view of a multi-speed planetary transmission of the cutting tool of FIG. 1, illustrating the transmission in a high-speed mode.
FIG. 5 is a partial cross-sectional view of the multi-speed planetary transmission of FIG. 4, illustrating the transmission in a low-speed mode.
FIG. 6 is a side view of a cam and a ratchet mechanism of the cutting tool of FIG. 1, illustrating the ratchet mechanism incrementally closing the blades of the cutting tool.
FIG. 7 is a side view of the cam and ratchet mechanism of FIG. 6, illustrating the ratchet mechanism being released to open the blades of the cutting tool.
FIG. 8 is an enlarged, front perspective view of the cutting tool of FIG. 1.
FIG. 9 is a cross-sectional view of the cutting tool taken along line 9--9 in FIG. 8.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting

### DETAILED DESCRIPTION

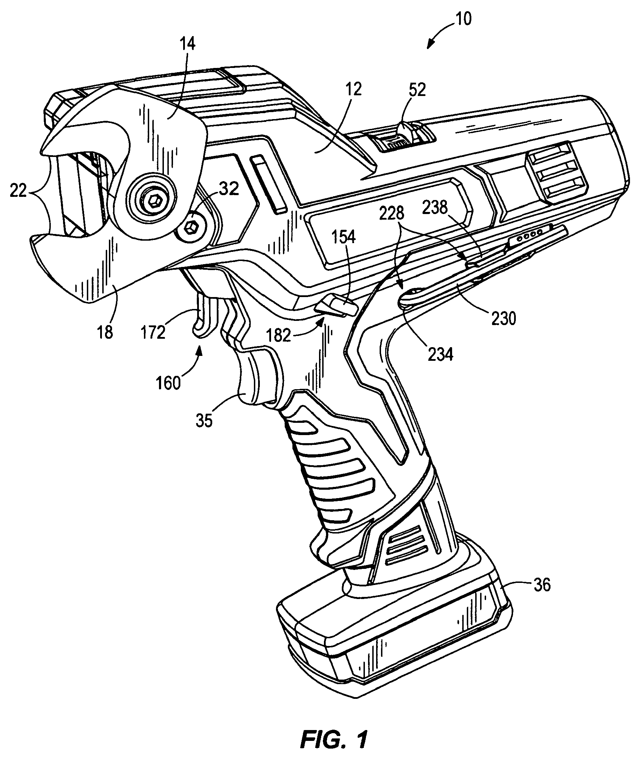

FIG. 1 illustrates a powered cable-cutting tool 10. The tool 10 includes a housing 12 and a pair of cutting blades 14, 18 at least partially extending from the housing 12. In the illustrated construction of the tool 10, each of the blades 14, 18 is shaped having a curved cutting edge 22. Alternatively, one or both of the blades 14, 18 may include a straight cutting edge. Furthermore, one or both of the blades 14, 18 may include one or more support portions sized to accommodate different cable diameters of standard sizes. Also, in the illustrated construction of the tool 10, the blades 14, 18 are offset with respect to a vertical plane passing through the middle of the housing 12. Alternatively, the position of the blades 14, 18 may coincide with the vertical plane passing through the middle of the housing 12.

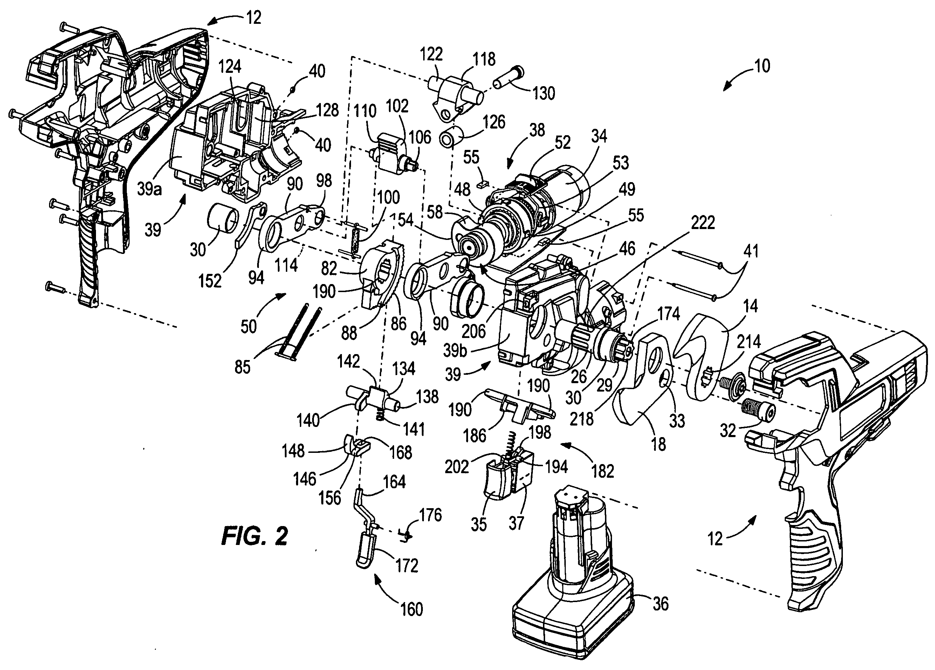

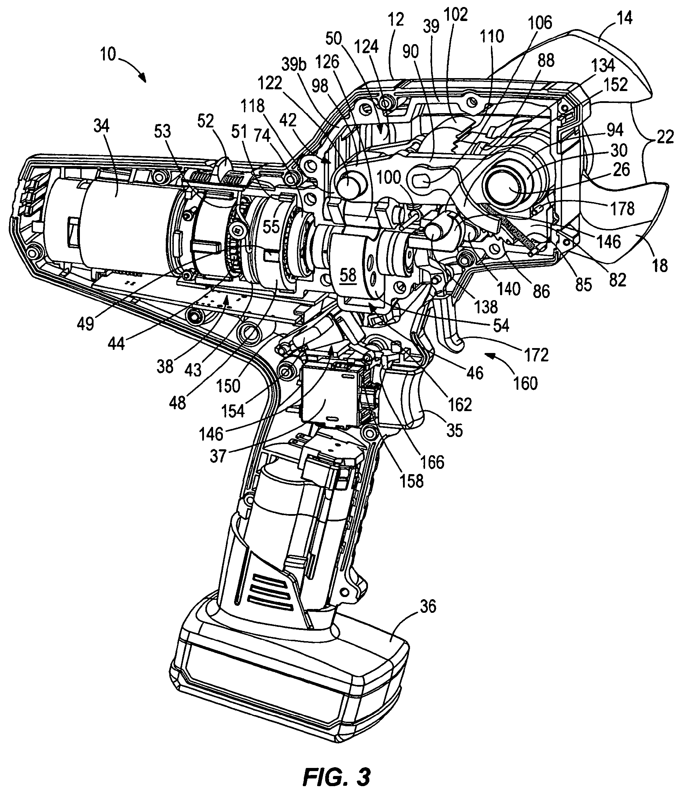

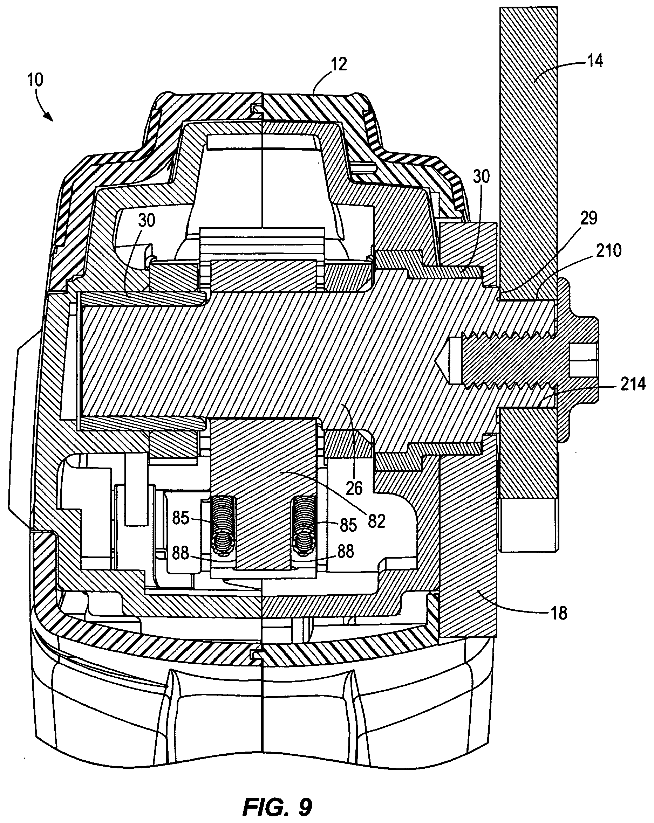

With reference to FIG. 2, the cutting blades 14, 18 are pivotably coupled by an output shaft 26 that is rotatably supported within the housing by spaced bushings 30 (see also FIG. 9). In the illustrated construction of the tool 10, the lower blade 18 (i.e., from the frame of reference of FIGS. 1 and 2) is fixed to the housing 12 while the upper blade 14 is coupled for co-rotation with the shaft 26. Particularly, the output shaft 26 includes a first spline portion 210 that is received within a corresponding shaped aperture 214 in the upper blade 14. The first spline portion 210 is asymmetrical in that a locating spline 218 on the first spline portion 210 has a width different than that of the remaining splines on the spline portion 210. As such, the upper blade 14 may be fit to the shaft 26 in only a single orientation. During operation of the tool 10, the output shaft 26 is rotated within the housing 12 (i.e., in a clockwise direction from the frame of reference of FIG. 3) to pivot the upper blade 14 relative to the lower blade 18 to thereby close the gap between the blades 14, 18 and perform a cutting operation. Alternatively, both of the blades 14, 18 may be movable relative to the housing 12 when performing a cutting operation.

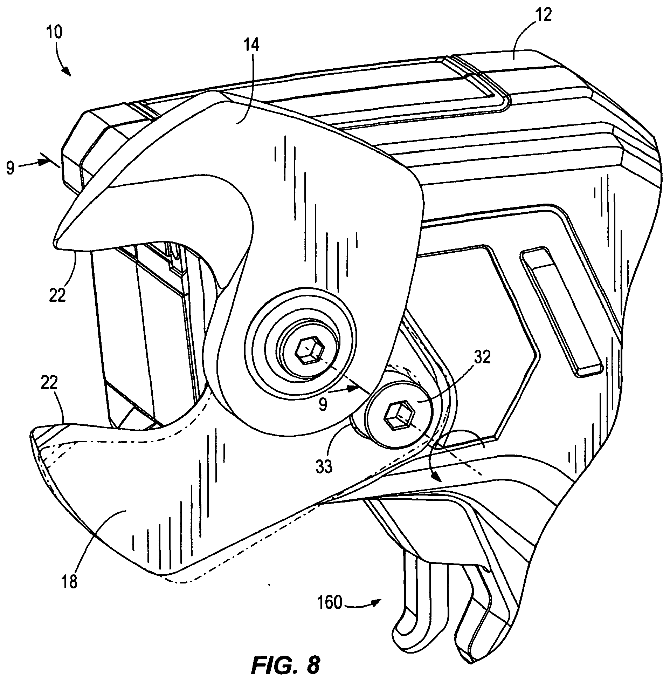

With reference to FIG. 2, the lower blade 18 is prevented from pivoting relative to the housing 12 by a securing member (e.g., in the illustrated construction of the tool 10, a cap screw 32) having a head that is received within a stepped aperture 33 in the lower blade 18. The stepped aperture 33 has a diameter nominally larger than a diameter of a head of the cap screw 32. When the head of the cap screw 32 is removed from the aperture 33, the lower blade 18 is permitted to pivot away from the upper blade 14 a limited amount about the output shaft 26 (e.g., 5 degrees; FIG. 8) to clear any jams that might occur between the workpiece and the blades 14, 18. Alternatively, the securing member may be configured in any of a number of different manners (e.g., a tool-less clamp, etc.) to selectively permit the lower blade 18 to be pivoted a limited amount to clear any jams that might occur between the workpiece and the blades 14, 18.

With reference to FIG. 1, the tool 10 also includes an on-board tool storage arrangement 228 for carrying one or more hand tools (e.g., a hex key 230) for loosening and tightening the cap screw 32. Particularly, the arrangement 228 includes a through-hole 234 in the housing 12 in which one segment of the hex key 230 may be received, and a clamp 238 in which the other segment of the hex key 230 is secured. Another hex key 230 may be supported on the other side of the housing 12 not shown in FIG. 1.

With reference to FIG. 9, the output shaft 26 includes a shoulder 29 for maintaining a gap between the blades 14, 18 during operation of the tool 10. For example, such a gap may be between about 0.005 inches and about 0.010 inches in length.

With reference to FIGS. 2 and 3, the tool 10 includes an electric motor 34 positioned within the housing 12. The motor 34 may be powered by an on-board power source (e.g., a battery 36) or a remote power source (e.g., an electrical outlet) via a power cord. The tool 10 also includes a switch 37 selectively electrically connecting the power source and the motor 34. The switch 37 is actuated by a pull trigger 35 which, in turn, is engageable by a user of the tool 10 during the normal course of operation of the tool 10. The tool 10 may also include a controller electrically connected to the switch 37 and the motor 34 to provide varied operation of the motor 34 in response to actuation of the switch 37 (e.g., a variable speed operation, etc.).

With reference to FIGS. 1-3, the tool 10 also includes a trigger lock 182 that must be actuated before the trigger 35 may be pulled to activate the motor 34. The trigger lock 182 includes a first lever 186 that is pivotably coupled to the housing 12 (FIG. 3). The first lever 186 includes opposed projections 190 that extend from opposite sides of the housing 12, respectively, to be accessible to the user of the tool 10 (see also FIG. 1). The trigger lock 182 also includes a second lever 194 that is pivotably coupled to the housing 12 (FIG. 3). The first lever 186 is engageable with a first arm 198 of the second lever 194 to pivot the second lever 194 from a first position, in which a second arm 202 of the lever 194 blocks actuation of the trigger 35, toward a second position, in which the second arm 202 is cleared of the trigger 35. Therefore, in operation of the tool 10, a user must depress one of the projections 190 to pivot the first lever 186 clockwise, from the frame of reference of FIG. 3, to engage and pivot the second lever 194 from the first position to the second position prior to pulling the trigger 35.

With continued reference to FIGS. 2 and 3, the tool 10 further includes a transmission 38 configured to receive torque from the motor 34 and provide an output having an increased torque at a reduced rotational speed compared to the output of the motor 34. In the illustrated construction of the tool 10, the transmission 38 includes a transmission housing 39 having respective portions 39a, 39b that are secured in a clamshell arrangement (FIG. 2). Particularly, the transmission housing portion 39a includes a plurality of nuts 40 supported therein, while the other transmission housing portion 39b includes a corresponding plurality of bolts 41 supported therein for threadably engaging the nuts 40 in the portion 39a. The motor 34 is thereby clamped between the transmission housing portions 39a, 39b using the same fasteners 40, 41. The transmission housing portions 39a, 39b are also made of different materials to provide a higher yield strength to the portion 39b to which the fixed lower blade 18 is mounted. Specifically, the transmission housing portion 39b is made from an alloy having an increased Zinc content compared to the alloy used in making the transmission housing portion 39a.

With continued reference to FIG. 2, the tool 10 includes a light 206 (e.g., an LED) on the transmission housing 39 for illuminating the area on a workpiece to be cut. In the illustrated construction of the tool 10, the light 206 is positioned adjacent the upper blade 14 on a side of the transmission housing portion 39b facing the blades 14, 18. Alternatively, the light 206 may be positioned elsewhere on the tool 10. In operation of the tool 10, the light 206 is activated in response to the trigger 35 being depressed, and remains on for a period of time after the trigger 35 is released. The light 206 may also be activated separately from the motor 34 by only slightly depressing the trigger 35.

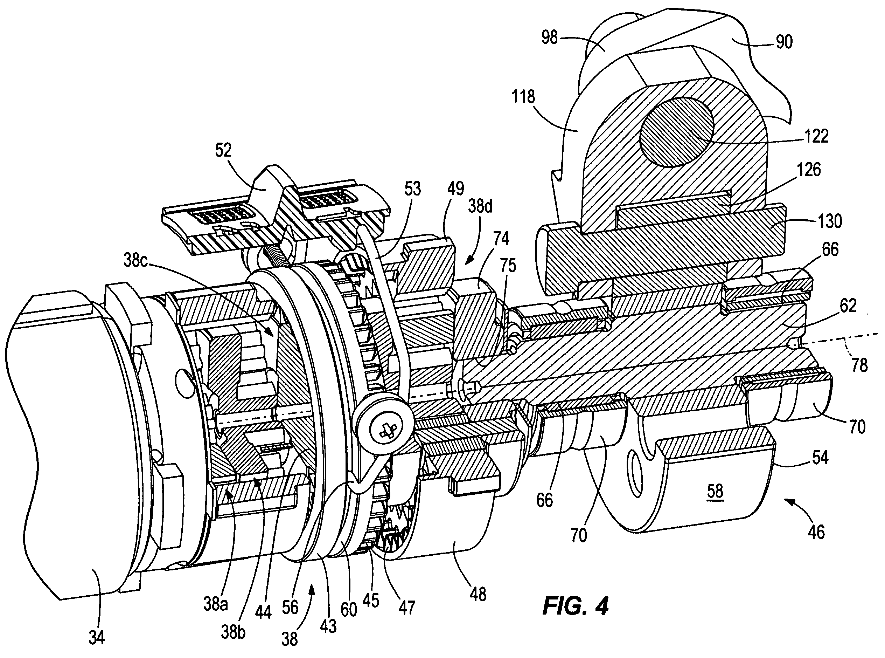

In the illustrated construction of the tool 10, the transmission 38 is configured as a planetary transmission 38 having a plurality of stages, one of which may be deactivated to provide a multi-speed output. For example, the illustrated transmission 38 includes four planetary stages, the first 38a, second 38b, and fourth stages 38d of which remain active at all times, while the third planetary stage 38c may be selectively deactivated by the user of the tool 10 to use the tool 10 in a high speed mode (FIG. 4). The third planetary stage 38c may be deactivated, for example, by adjusting an outer ring gear 43 of the third planetary stage 38c such that it co-rotates with a carrier 44 of the second planetary stage 38b. Consequently, the planet gears and the carrier of the third planetary stage 38c would also co-rotate with the carrier 44 of the second planetary stage 38b, thereby transferring the rotational output of the carrier 44 of the second planetary stage 38b through all of the components of the third planetary stage 38c without any additional speed reduction.

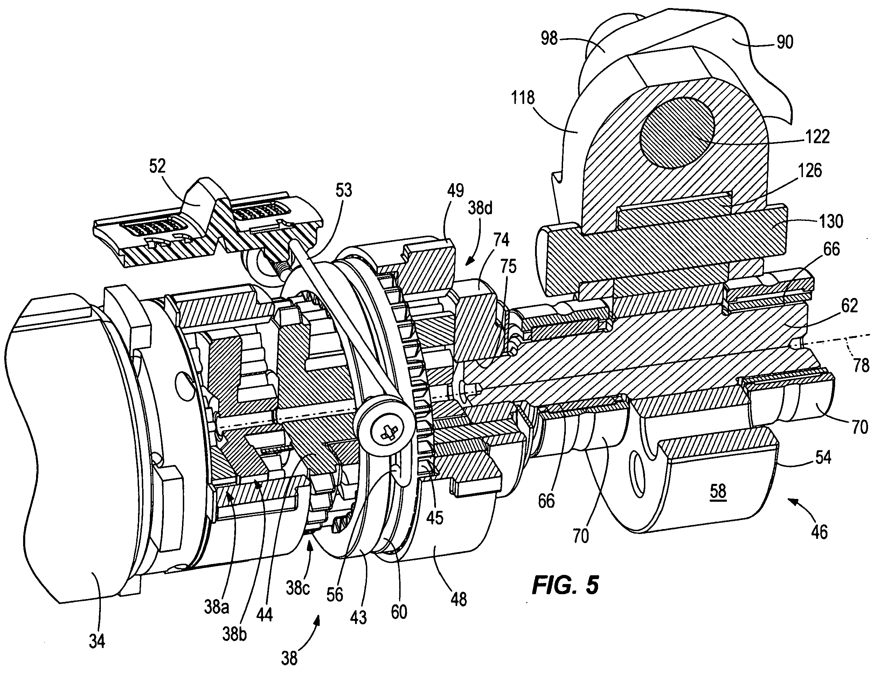

The third planetary stage 38c may be activated by adjusting the outer ring gear 43 of the third planetary stage 38c such that it is fixed relative to the housing 12 (FIG. 5). Particularly, the outer ring gear 43 includes a plurality of teeth 45 that are engaged with corresponding teeth 47 on an internal surface of an outer ring gear 48 of the fourth planetary stage 38d which, in turn, is rotatably fixed to the transmission housing 39 by a plurality of protrusions 49 on the outer periphery of the outer ring gear 48 that are received within corresponding recesses 51 in the transmission housing 39 (FIG. 3). Accordingly, when the outer ring gear 43 is shifted to the position shown in FIG. 5, the planet gears of the third planetary stage 38c may be driven by the carrier 44 of the second planetary stage 38b to "walk" about the inner periphery of the outer ring gear 43, thereby rotating the carrier of the third planetary stage 38c at a reduced rotational speed compared to the carrier of the second planetary stage 38b. The tool 10, therefore, may be used in a low speed mode.

With reference to FIG. 2, rubber bumpers 55 are positioned adjacent the top and bottom protrusions 49 on the outer ring gear 48 of the fourth planetary stage 38d to absorb reverse impact loading to the transmission 38 during operation of the tool 10.

The outer ring gear 43 of the third planetary stage 38c is adjusted or manipulated between the configurations described above by an actuator 52 that at least partially protrudes through the housing 12. In the illustrated construction of the tool 10, the actuator 52 is configured as a slide switch 52 that is movable between a first position, in which the third planetary stage 38c is active for providing a low speed mode of the tool 10, and a second position, in which the third planetary stage 38c is inactive to provide a high speed mode of the tool 10. A pivoting wire 53 is positioned between the slide switch 52 and the outer ring gear 43 for transferring the linear movement of the slide switch 52 to the outer ring gear 43 between the above-described positions for providing the high speed and low speed modes of the tool 10. Particularly, opposite ends 56 of the wire 53 slide within a circumferential groove 60 in the outer ring gear 43, thereby facilitating linear movement of the outer ring gear 43 while permitting rotation of the outer ring gear 43 in the high speed mode of the tool 10.

With reference to FIGS. 2 and 3, the tool 10 also includes a drive mechanism 42 including a cam 46 and a ratchet mechanism 50 drivably coupling the transmission 38 and the upper blade 14. As shown in FIG. 2, the cam 46 includes a lobe 54 having a cam surface 58 and a shaft 62 fixed for co-rotation with the lobe 54 (using, for example, an interference fit, by integrally forming or molding, etc.; FIGS. 4 and 5). Opposite ends 66 of the shaft 62 are rotatably supported by the transmission housing 39 by respective bushings 70. One end 66 of the shaft 62 includes a non-circular cross-sectional shape, and an output carrier 74 of the fourth planetary stage 38d includes an aperture 75 having a corresponding shape in which the end 66 of the shaft 62 is received. As such, a driving connection is established between the shaft 62 and the transmission 38. The cam surface 58 is spaced from a rotational axis 78 of the shaft 62 by a varying distance to impart translation to a portion of the ratchet mechanism 50, in a direction substantially normal to the direction of the rotational axis 78, in response to rotation of the cam 46. It should be understood that the cam 46 may be configured differently than that shown in the drawings. For example, the cam 46 may be configured as an eccentric pin on a rotating arm (e.g., for use with a scotch-yoke mechanism).

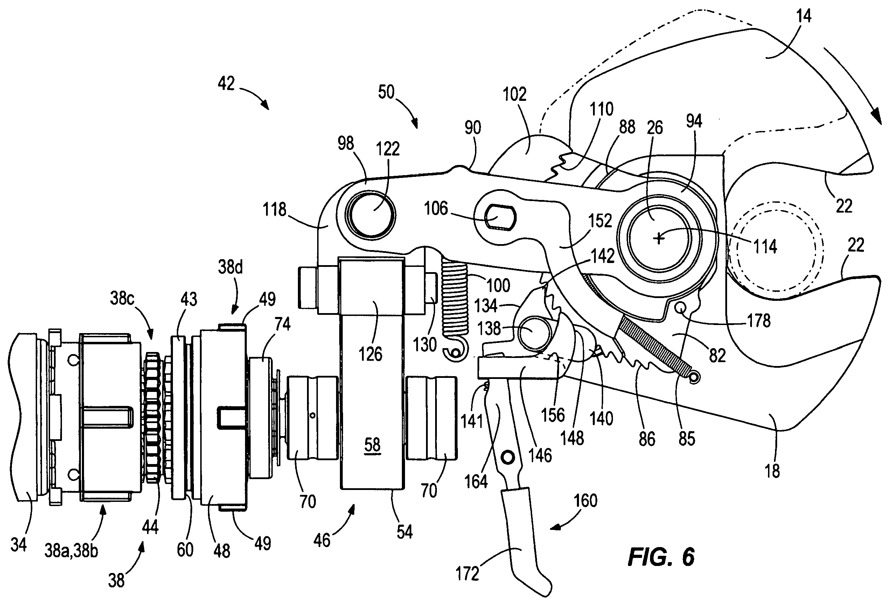

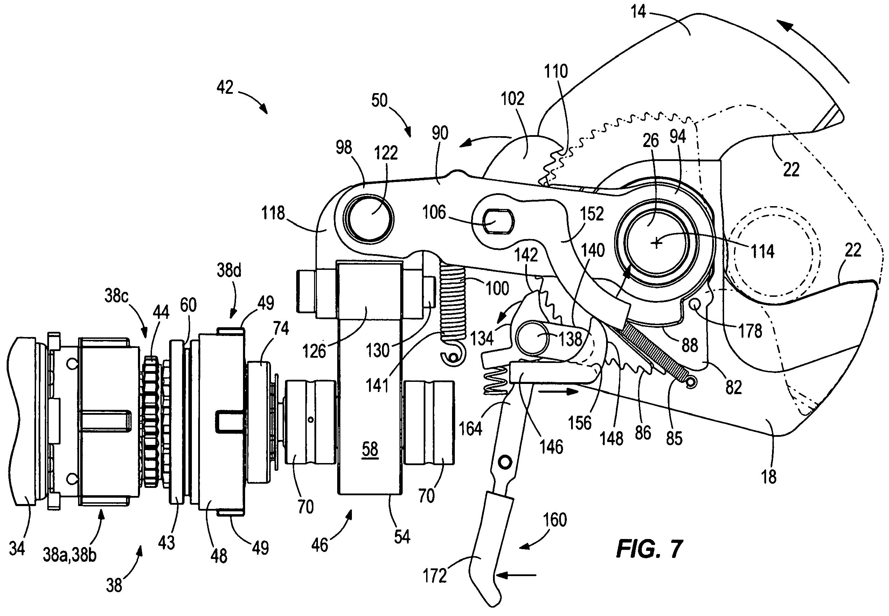

With reference to FIGS. 2 and 3, the ratchet mechanism 50 includes a ratchet 82 drivably coupled to the upper blade 14 via the output shaft 26. Particularly, the output shaft 26 includes a second spline portion 222 that is received within a corresponding shaped aperture 226 in the ratchet 82. The second spline portion 222 is asymmetrical in that a locating spline (not shown) on the second spline portion 222 has a width different than that of the remaining splines on the spline portion 222. As such, the ratchet 82 may be fit to the shaft 26 in only a single orientation. As such, the ratchet 82 is coupled for co-rotation with the upper blade 14 and the output shaft 26. The ratchet 82 is substantially arc-shaped and includes teeth 86. The ratchet 82 also includes respective grooves 88 in opposite faces of the ratchet 82 in which corresponding tension springs 85 are received (FIG. 2). One end of each spring 85 is anchored to the transmission housing 39, while the other end of each spring 85 is fixed to the ratchet 82. As such, the springs 85 bias the ratchet 82 in a clockwise direction from the frame of reference of FIGS. 6 and 7. The ratchet mechanism 50 also includes parallel links 90, each of which includes a first end 94 pivotably coupled to the output shaft 26 and a second end 98 that is movable in response to rotation of the cam 46. A tension spring 100 couples the links 90 and the transmission housing 39 for biasing the links 90 toward a default or "home" position shown in FIG. 3.

The ratchet mechanism 50 further includes a first, driven pawl 102 coupled to each of the links 90 between the first and second ends 94, 98 (FIG. 2). More particularly, the pawl 102 includes a support shaft 106 extending from each side of the pawl 102 that is received within respective apertures in the links 90. As such, the pawl 102 is pivotably coupled to the links 90. As is discussed in more detail below, the pawl 102 is pivoted between a first position, in which the pawl 102 is engaged with the ratchet 82, and a second position, in which the pawl 102 is disengaged from the ratchet 82.

The pawl 102 also includes teeth 110 that are selectively engaged with the teeth 86 on the ratchet 82. With reference to FIG. 6, the teeth 86, 110 on the respective ratchet 82 and pawl 102 are shaped such that, in response to rotation of the pawl 102 and the links 90 about the output shaft 26 in a clockwise direction from the frame of reference of FIG. 6, the pawl 102 is prevented from sliding relative to the ratchet 82. The engaged ratchet 82 and pawl 102, therefore, co-rotate about a rotational axis 114 of the output shaft 26. However, the pawl 102 is permitted to slide relative to the ratchet 82 in response to rotation of the pawl 102 and the links 90 about the output shaft 26 in a counter-clockwise direction from the frame of reference of FIG. 6.

With reference to FIGS. 2 and 3, the ratchet mechanism 50 further includes a follower 118 pivotably coupled to the second end 98 of each of the links 90 and engaged with the cam 46. A pin 122 is received within respective apertures in the links 90 and the follower 118 to pivotably couple the links 90 and the follower 118. Opposite ends of the pin 122 are trapped within respective slots 124 in the transmission housing 39 (FIG. 2) configured to permit only vertical movement of the pin 122 within the slots 124 (i.e., relative to the frame of reference of FIG. 6). In other words, the pin 122, and therefore the ends 98 of the respective links 90, is prevented from translating relative to the transmission housing 39 in any other direction.

In the illustrated construction of the tool 10, the follower 118 includes a roller 126 engaged with the cam 46 (FIG. 2). The roller 126 is rotatably supported by a pin 130, which includes opposite ends trapped within respective slots 128 in the transmission housing 39 (FIG. 2) configured to permit only vertical movement of the pin 130 within the slots 128 (i.e., relative to the frame of reference of FIG. 6). In other words, the pin 130, and therefore the follower 118, is prevented from translating relative to the transmission housing 39 in any other direction.

With reference to FIG. 2, the ratchet mechanism 50 also includes a second, follower pawl 134 pivotably coupled to the transmission housing 39 and engaged with the ratchet 82. More particularly, the pawl 134 is supported on a support shaft 138 having opposite ends of which that are pivotably supported by the transmission housing 39. An arm 140 is also coupled to the support shaft 138 for co-rotation with the support shaft 138 and the pawl 134. In the illustrated construction of the tool 10, the pawl 134, the support shaft 138, and the arm 140 are integrally formed as a single piece. The tool 10 also includes a biasing member (e.g., a compression spring 141) that biases the pawl 134 in a clockwise direction from the frame of reference of FIGS. 6 and 7 for engaging the pawl 134 and the ratchet 82. As is discussed in more detail below, the follower pawl 134 is pivoted between a first, biased position, in which a tip 142 of the pawl 134 is engaged with the ratchet 82, and a second position against the bias of the spring 141, in which the pawl 134 is disengaged from the ratchet 82.

With reference to FIG. 2, the tool 10 includes an actuator 146 coupled to both of the pawls 102, 134. More particularly, the actuator 146 includes a first cam lobe 148 engageable with the driven pawl 102 via a lever 152 coupled for co-rotation with one of the support shafts 106 (e.g., via an interference fit with a portion of the support shaft 106), and a second cam lobe 156 engageable with the follower pawl 134 via the arm 140 on the support shaft 138. The actuator 146 is biased toward the left from the frame of reference of FIG. 6 by the compression spring 141 via the interaction between the second cam lobe 156 and the arm 140. The actuator 146, therefore, would be movable (i.e., forward or to the right from the frame of reference of FIG. 6) between a first position against the bias of the spring 141 in which the driven and follower pawls 102, 134 are permitted to engage the ratchet 82 (FIG. 6), and a second position in which the actuator 146 disengages the driven and follower pawls 102, 134 from the ratchet 82 (FIG. 7). When moving the actuator 146 from the first position to the second position, the driven and follower pawls 102, 134 would be pivoted in a counter-clockwise direction from the frame of reference of FIG. 7 to disengage the respective pawls 102, 134 from the ratchet 82 to permit the gap between the blades 14, 18 to be re-opened in preparation for another cutting operation.

In the illustrated construction of the tool 10, a trigger 160 is pivotably coupled to the transmission housing 39 and includes a branch portion 164 that is received within a corresponding slot 168 in the actuator 146 and a trigger portion 172 that is engageable by a user of the tool 10. The tool 10 also includes a biasing member (e.g., a torsion spring 176) that biases the trigger 160 in a counter-clockwise direction from the frame of reference of FIG. 7 to permit the compression spring 141, via the pawl 134 and arm 140, to return the actuator 146 to its "home" position shown in FIG. 6. The trigger 160 may then be pivoted in a clockwise direction from the frame of reference of FIG. 7 to engage the actuator 146 and move the actuator 146 toward its second position. Alternatively, the actuator 146 may be moved between its first and second positions using any of a number of different mechanisms that protrude from the housing 12 to be easily accessible to the user of the tool 10.

To perform a cutting operation with the tool 10, the user would first place a cable or other workpiece within the gap between the blades 14, 18 (FIG. 6). The switch 37 is then actuated (e.g., by pulling the trigger 35, etc.) to activate the motor 34 which, in turn, drives the transmission 38 and the cam 46. As the cam 46 is rotated in a counter-clockwise direction from the frame of reference of FIG. 2, the roller 126 rides along the cam surface 58 and is displaced upwardly with the follower 118 as the location of maximum lift is approached. Because the links 90 are pivotably supported on the output shaft 26 (which is pivotably supported by the transmission housing 39), the links 90 and the driven pawl 102 are pivoted away from their home position in a clockwise direction from the frame of reference of FIG. 6 about the axis 114 of the output shaft 26, thereby causing the driven pawl 102 (which is engaged with the ratchet 82) to incrementally rotate the ratchet 82, the output shaft 26, and the upper blade 14 about the axis 114 of the output shaft 26. The shape of the teeth 86 on the ratchet 82 also permits the ratchet 82 to slide relative to the follower pawl 134, with the tip 142 of the pawl 134 being successively moved between adjacent teeth 86, as the ratchet 82 is driven in a clockwise direction about the axis 114 of the output shaft 26. Therefore, the follower pawl 134 locks the upper blade 14 in successive positions relative to the lower blade 18 coinciding with the spacing between adjacent teeth 86 on the ratchet 82, and prevents the upper blade 14 from rotating relative to the lower blade 18 in a counter-clockwise direction.

After the follower 118 passes over the location of maximum lift on the cam 46, the links 90 and the driven pawl 102 are permitted to rotate in a counter-clockwise direction from the frame of reference of FIG. 6 about the axis 114 of the output shaft 26, toward the home position of the links 90, while the follower pawl 134 maintains the upper blade 14 in position relative to the lower blade 18. As previously discussed, the shape of the teeth 86, 110 on the respective ratchet 82 and driven pawl 102 permit the driven pawl 102 to slide relative to the ratchet 82 as the links 90 return to their home position. Continued rotation of the cam 46 again causes the follower 118 to be upwardly displaced as the location of maximum lift is approached, thereby causing the driven pawl 102 to incrementally rotate the ratchet 82, the output shaft 26, and the upper blade 14 in a clockwise direction to further close the gap between the blades 14, 18. This process is continued until the gap is sufficiently closed to complete the cutting operation on the cable or other workpiece.

The ratchet 82 includes an aperture in which a stop member (e.g., a pin 178; FIG. 3) is received that is engageable with at least one of the parallel links 90 to limit the extent to which the ratchet 82, and therefore the upper blade 14, may be pivoted relative to the housing 12 in a clockwise direction from the frame of reference of FIG. 6. Alternatively, the stop member may be configured in any of a number of different manners.

After the cutting operation is complete, the user may depress the trigger 160 to slide the actuator 146 toward its second position shown in FIG. 7 to pivot both the driven pawl 102 and the follower pawl 134 in a counter-clockwise direction from the frame of reference of FIG. 7 to disengage the ratchet 82. The ratchet 82, the output shaft 26, and the upper blade 14 may then be pivoted counter-clockwise (e.g., by the return springs 85) to reopen the gap between the blades 14, 18 in preparation for another cutting operation. The user may then release the trigger 160 to permit the actuator 146 to be returned to the first position shown in FIG. 6 by the compression spring 141 (via the interaction with the arm 140) to permit the driven and follower pawls 102, 134 to re-engage the ratchet 82. Because the trigger 160 is positioned proximate the trigger 35, the user of the tool 10 may use their same hand for pulling the trigger 160 as that used when pulling the trigger 35.

Various features of the invention are set forth in the following claims..

## Claims

1. A cutting tool (10) comprising:
a housing (12);
a pair of cutting blades (14, 18) at least partially extending from the housing (12), at least a first of the cutting blades (14, 18) is movable;
a drive mechanism (42) including a cam (46) and a ratchet mechanism (50), at least a portion of the ratchet mechanism (50) is drivably coupled to the first cutting blade (14, 18); and
a motor (34) for providing torque to the cam (46) to actuate the ratchet mechanism (50).

2. The cutting tool (10) of claim 1, wherein a second of the cutting blades (14, 18) is fixed relative to the housing (12).

3. The cutting tool (10) of claim 1, further comprising an output shaft (26) rotatably supported within the housing (12), wherein the first cutting blade (14, 18) is coupled for co-rotation with the output shaft (26), and wherein a second of the cutting blades (14, 18) is pivotably supported by the output shaft (26).

4. The cutting tool (10) of claim 3, wherein:
the cutting tool (10) further comprises a securing member (32) that is movable between a first position, in which the second cutting blade (14, 18) is secured relative to the housing (12), and a second position, in which limited pivoting movement of the second cutting blade (14, 18) about the output shaft (26) is permitted; and/or
the output shaft (26) includes a shoulder (29) for maintaining a gap between the cutting blades (14, 18); and/or
the output shaft (26) includes a spline portion (210) to which the first cutting blade (14, 18) is engaged wherein optionally the spline portion (210) is asymmetrically shaped such that the first cutting blade (14, 18) is engageable with the spline portion (210) in only a single orientation.

5. The cutting tool (10) of claim 1, wherein the ratchet mechanism (50) includes
a ratchet (82) coupled for co-rotation with the first cutting blade (14, 18),
a link (90) having a first end (94) pivotably coupled to the output shaft (26) and a second end (98) that is movable in response to rotation of the cam (46), and
a pawl (102) coupled to the link (90) between the first (94) and second (98) ends and engaged with the ratchet (82).

6. The cutting tool (10) of claim 5, wherein:
the ratchet mechanism (50) further includes a follower (118) pivotably coupled to the second end (98) of the link (90) and engaged with the cam (46), the follower (118) optionally including a roller (126) engaged with the cam (46); and/or
the pawl (102) is pivotably coupled to the link (90) and movable between a first position, in which the pawl (102) is engaged with the ratchet (82), and a second position, in which the pawl (102) is disengaged from the ratchet (82).

7. The cutting tool (10) of claim 5, wherein the pawl (102) is a first pawl, and wherein the ratchet mechanism (50) further includes a second pawl (134) pivotably coupled to the housing (12) and engaged with the ratchet (82).

8. The cutting tool (10) of claim 7, further comprising an actuator (146) engageable with the first (102) and second (134) pawls, and wherein the actuator (146) is movable between a first, biased position in which the first (102) and second (134) pawls are permitted to engage the ratchet (82), and a second position in which the actuator (146) disengages the first (102) and second (134) pawls from the ratchet (82); wherein:
the ratchet mechanism (50) optionally further includes a lever (152) coupled for co-rotation with the first pawl (102), a support shaft (106) upon which the second pawl (134) is coupled for co-rotation, and an arm (140) coupled to the support shaft (106) for co-rotation with the support shaft (106) and the second pawl (134);
and/or
the actuator (146) optionally includes a first cam lobe (148) engageable with the lever (152) when in the second position, and a second cam lobe (156) engageable with the arm (140) when in the second position; and/or
the cutting tool (10) further comprises a first trigger (35) operable to activate the motor (34), and a second trigger (160) operably coupled to the actuator (146) for moving the actuator (146) between the first and second positions, wherein the second trigger (160) is optionally positioned proximate the first trigger (35) such that an operator may grasp the first (35) and second (160) triggers with a single hand; and/or the second trigger (160) is optionally pivotable between the first and second positions.

9. The cutting tool (10) of claim 1, further comprising a transmission (38) positioned between the motor (34) and the cam (46), wherein:
the transmission (38) is optionally a multi-speed transmission for providing at least a high speed mode and a low speed mode of the cutting tool (10); and/or
the transmission (38) is optionally a multi-stage planetary transmission having at least two planetary stages (38a, 38b, 38c, 38d), and the cutting tool (10) optionally further comprises an actuator (52) that is movable between a first position, in which both of the planetary stages (38a, 38b, 38c, 38d) are active, and a second position, in which one of the planetary stages (38a, 38b, 38c, 38d) is inactive.

10. The cutting tool (10) of claim 1, further comprising:
a light (206) located proximate at least one of the cutting blades (14, 18) for illuminating a region on a workpiece to be cut; and/or
on-board tool storage arrangement (228) for carrying a hand tool (230) for use with the cutting tool (10), wherein the on-board tool storage arrangement (228) is optionally a first tool storage arrangement (228) located on the first side of the housing (12), and wherein the cutting tool (10) further includes a second on-board tool storage arrangement (228) located on a second side of the housing (12).

11. The cutting tool (10) of claim 9, wherein the transmission (38) includes
at least one planetary stage (38a, 38b, 38c, 38d) having an outer ring gear (43),
a transmission housing (39) in which the outer ring gear (43) is supported, and
at least one rubber bumper (55) engaged with the outer ring gear (43) for absorbing reverse impact loading to the transmission (38) during operation of the tool (10).

12. The cutting tool (10) of claim 5, wherein the ratchet mechanism (50) further includes a stop member (178) that is engageable with the link (90) to limit the extent to which the ratchet (82) and the first cutting blade (14, 18) may be pivoted relative to the housing (12).

13. The cutting tool (10) of claim 5, further comprising an output shaft (26) rotatably supported within the housing (12), and wherein the output shaft (26) includes a spline portion (210) to which the ratchet (82) is engaged wherein the spline portion (210) is optionally asymmetrically shaped such that the ratchet (82) is engageable with the spline portion (210) in only a single orientation.

14. The cutting tool (10) of claim 5, wherein the ratchet (82) is rotatable in a first direction, against the bias of a spring (85), in response to actuation of the ratchet mechanism (50) by the motor (34).

## Patentansprüche

1. Schneidewerkzeug (10) umfassend:
ein Gehäuse (12);
ein Paar von Schneideklingen (14, 18), die sich mindestens teilweise vom Gehäuse (12) aus erstrecken, wobei mindestens eine erste der Schneideklingen (14, 18) beweglich ist;
einen Antriebsmechanismus (42), einschließlich einer Nocke (46) und eines Sperrklinkenmechanismus (50), wobei mindestens ein Abschnitt des Sperrklinkenmechanismus (50) antreibbar mit der ersten Schneideklinge (14, 18) verbunden ist; und
einen Motor (34) zum Bereitstellen von Drehmoment an die Nocke (46) zum Betätigen des Sperrklinkenmechanismus (50).

2. Schneidewerkzeug (10) nach Anspruch 1, worin eine zweite der Schneideklingen (14, 18) in Bezug auf das Gehäuse (12) feststehend ist.

3. Schneidewerkzeug (10) nach Anspruch 1, ferner umfassend eine Ausgangswelle (26), die drehbar im Gehäuse (12) gelagert ist, worin die erste Schneideklinge (14, 18) zur gemeinsamen Drehung mit der Ausgangswelle (26) verbunden ist, und worin eine zweite der Schneideklingen (14, 18) schwenkbar von der Ausgangswelle (26) gelagert wird.

4. Schneidewerkzeug (10) nach Anspruch 3, worin:
das Schneidewerkzeug (10) ferner ein Befestigungsglied (32) umfasst, das beweglich ist zwischen einer ersten Position, in der die zweite Schneideklinge (14, 18) in Bezug auf das Gehäuse (12) festgestellt ist, und einer zweiten Position, in der eine beschränkte Schwenkbewegung der zweiten Schneideklinge (14, 18) um die Ausgangswelle (26) erlaubt ist; und/oder
die Ausgangswelle (26) einen Absatz (29) enthält, um einen Abstand zwischen den Schneideklingen (14, 18) beizubehalten; und/oder
die Ausgangswelle (26) einen Nutenabschnitt (210) enthält, in den die erste Schneideklinge (14, 18) eingreift, worin der Nutenabschnitt (210) optional asymmetrisch geformt ist, sodass die erste Schneideklinge (14, 18) nur in einer einzigen Ausrichtung in den Nutenabschnitt (210) eingreifen kann.

5. Schneidewerkzeug (10) nach Anspruch 1, worin der Sperrklinkenmechanismus (50) enthält:
eine Sperrklinke (82), die zur gemeinsamen Drehung mit der ersten Schneideklinge (14, 18) verbunden ist,
ein Verbindungsstück (90) mit einem ersten Ende (94), das schwenkbar mit der Ausgangswelle (26) verbunden ist, und einem zweiten Ende (98), das beweglich als Reaktion auf die Drehung der Nocke (46) ist, und
ein Sperrglied (102), das mit dem Verbindungsstück (90) zwischen dem ersten (94) und zweiten (98) Ende verbunden ist und mit der Sperrklinke (82) in Eingriff ist.

6. Schneidewerkzeug (10) nach Anspruch 5, worin:
der Sperrklinkenmechanismus (50) ferner einen Mitnehmer (118) enthält, der mit dem zweiten Ende (98) des Verbindungsstücks (90) schwenkbar verbunden ist und in Eingriff mit der Nocke (46) ist, wobei der Mitnehmer (118) optional eine Rolle (126) enthält, die mit der Nocke (46) in Eingriff ist; und/oder
das Sperrglied (102) schwenkbar mit dem Verbindungsstück (90) verbunden und zwischen einer ersten Position, in der das Sperrglied (102) in Eingriff mit der Sperrklinke (82) ist, und einer zweiten Position, in der das Sperrglied (102) nicht mit der Sperrklinke (82) in Eingriff ist, beweglich ist.

7. Schneidewerkzeug (10) nach Anspruch 5, worin das Sperrglied (102) ein erstes Sperrglied ist, und worin der Sperrklinkenmechanismus (50) ferner ein zweites Sperrglied (134) enthält, das schwenkbar mit dem Gehäuse (12) verbunden und in Eingriff mit der Sperrklinke (82) ist.

8. Schneidewerkzeug (10) nach Anspruch 7, ferner umfassend ein Stellglied (146), das in das erste (102) und zweite (134) Sperrglied eingreifen kann, und worin das Stellglied (146) zwischen einer ersten vorgespannten Position, in der es dem ersten (102) und zweiten (134) Sperrglied erlaubt ist, in die Sperrklinke (82) einzugreifen, und einer zweiten Position, in der das Stellglied (146) das erste (102) und zweite (134) Sperrglied aus der Sperrklinke (82) ausrastet, beweglich ist; worin:
der Sperrklinkenmechanismus (50) optional ferner einen Hebel (152), der zur gemeinsamen Drehung mit dem ersten Sperrglied (102) verbunden ist, eine Trägerwelle (106), an der das zweite Sperrglied (134) zur gemeinsamen Drehung verbunden ist, und einen Arm (140), der mit der Trägerwelle (106) zur gemeinsamen Drehung mit der Trägerwelle (106) und dem zweiten Sperrglied (134) verbunden ist, enthält; und/oder
das Stellglied (146) optional einen ersten Nockenbuckel (148), der in der zweiten Position in den Hebel (152) eingreifen kann, und einen zweiten Nockenbuckel (156), der in der zweiten Position in den Arm (140) eingreifen kann, enthält; und/oder
das Schneidewerkzeug (10) ferner einen ersten Auslöser (35), der zum Aktivieren des Motors (34) betriebsfähig ist, und einen zweiten Auslöser (160) umfasst, der betriebsfähig mit dem Stellglied (146) verbunden ist, um das Stellglied (146) zwischen der ersten und zweiten Position zu bewegen, worin der zweite Auslöser (160) optional in der Nähe des ersten Auslösers (35) positioniert ist, sodass ein Bediener den ersten (35) und zweiten (160) Auslöser mit einer Hand greifen kann; und/oder der zweite Auslöser (160) optional zwischen der ersten und zweiten Position schwenkbar ist.

9. Schneidewerkzeug (10) nach Anspruch 1, ferner umfassend ein Getriebe (38), positioniert zwischen dem Motor (34) und der Nocke (46), worin:
das Getriebe (38) optional ein Mehrstufengetriebe ist, um mindestens einen Hochgeschwindigkeitsmodus und einen Niedergeschwindigkeitsmodus des Schneidewerkzeugs (10) bereitzustellen; und/oder
das Getriebe (38) optional ein mehrstufiges Planetengetriebe mit mindestens zwei Planetenstufen (38a, 38b, 38c, 38d) ist und das Schneidewerkzeug (10) optional ferner ein Stellglied (52) umfasst, das zwischen einer ersten Position, in der beide Planetenstufen (38a, 38b, 38c, 38d) aktiv sind, und einer zweiten Position, in der eine der Planetenstufen (38a, 38b, 38c, 38d) inaktiv ist, beweglich ist.

10. Schneidewerkzeug (10) nach Anspruch 1, ferner umfassend:
eine Leuchte (206) in der Nähe mindestens einer der Schneideklingen (14, 18), die einen Bereich am Werkstück, das geschnitten werden soll, beleuchtet; und/oder
eine integrierte Werkzeug-Speicheranordnung (228) zum Tragen eines Handwerkzeugs (230) für die Verwendung mit dem Schneidewerkzeug (10), worin die integrierte Werkzeug-Speicheranordnung (228) optional eine erste Werkzeug-Speicheranordnung (228) auf der ersten Seite des Gehäuses (12) ist, und worin das Schneidewerkzeug (10) ferner eine zweite integrierte Werkzeug-Speicheranordnung (228) auf einer zweiten Seite des Gehäuses (12) enthält.

11. Schneidewerkzeug (10) nach Anspruch 9, worin das Getriebe (38) mindestens eine Planetenstufe (38a, 38b, 38c, 38d) mit einem äußeren Tellerrad (43),
ein Getriebegehäuse (39), in dem das äußere Tellerrad (43) gelagert ist, und
mindestens einen Gummipuffer (55) in Eingriff mit dem äußeren Tellerrad (43) zum Dämpfen von Rückstoßlasten auf das Getriebe (38) während des Betriebs des Werkzeugs (10) enthält.

12. Schneidewerkzeug (10) nach Anspruch 5, worin der Sperrklinkenmechanismus (50) ferner ein Anschlagglied (178) enthält, das in das Verbindungsstück (90) eingreifen kann, um die Weite, in die die Sperrklinke (82) und die erste Schneideklinge (14, 18) in Bezug auf das Gehäuse (12) geschwenkt werden können, zu begrenzen.

13. Schneidewerkzeug (10) nach Anspruch 5, ferner umfassend eine Ausgangswelle (26), die drehbar im Gehäuse (12) gelagert ist, und worin die Ausgangswelle (26) einen Nutenabschnitt (210) enthält, in der die Sperrklinke (82) in Eingriff ist, worin der Nutenabschnitt (210) optional asymmetrisch geformt ist, sodass die Sperrklinke (82) in nur einer Ausrichtung in den Nutenabschnitt (210) eingreifen kann.

14. Schneidewerkzeug (10) nach Anspruch 5, worin die Sperrklinke (82) in einer ersten Richtung gegen die Vorspannung einer Feder (85) als Reaktion auf die Betätigung des Sperrklinkenmechanismus (50) durch den Motor (34) drehbar ist.

## Revendications

1. Outil de coupe (10) comprenant :
un carter (12) ;
une paire de lames de coupe (14, 18) s'étendant au moins partiellement à partir du carter (12), parmi lesquelles au moins une première lame de coupe (14, 18) est mobile ;
un mécanisme d'entraînement (42) comportant une came (46) et un mécanisme à cliquet (50), au moins une partie du mécanisme à cliquet (50) étant couplée avec la première lame de coupe (14, 18) d'une manière permettant son entraînement ; et
un moteur (34) permettant l'application d'un couple sur la came (46) pour actionner le mécanisme à cliquet (50).

2. Outil de coupe (10) selon la revendication 1, dans lequel une seconde des lames de coupe (14, 18) est fixe par rapport au carter (12).

3. Outil de coupe (10) selon la revendication 1, comprenant en outre un arbre de sortie (26) supporté rotatif à l'intérieur du carter (12), la première lame de coupe (14, 18) étant couplée de manière permettant une rotation conjointe avec l'arbre de sortie (26), et une seconde des lames de coupe (14, 18) étant supportée pivotante par l'arbre de sortie (26).

4. Outil de coupe (10) selon la revendication 3, dans lequel :
l'outil de coupe (10) comprend en outre un élément de fixation (32) qui est mobile entre une première position, dans laquelle la seconde lame de coupe (14, 18) est fixe par rapport au carter (12), et une seconde position permettant un pivotement limité de la seconde lame de coupe (14, 18) autour de l'arbre de sortie (26) ; et/ou
l'arbre de sortie (26) comporte un épaulement (29) destiné à maintenir un espace entre les lames de coupe (14, 18) ; et/ou
l'arbre de sortie (26) comporte une partie cannelée (210) avec laquelle la première lame de coupe (14, 18) est en prise, la partie cannelée (210) étant éventuellement de forme asymétrique pour que la première lame de coupe (14, 18) puisse être en prise avec cette partie cannelée (210) selon une seule orientation.

5. Outil de coupe (10) selon la revendication 1, dans lequel le mécanisme à cliquet (50) comporte :
un rochet (82) couplé pour une rotation conjointe avec la première lame de coupe (14, 18),
une biellette (90) présentant une première extrémité (94) couplée pivotante à l'arbre de sortie (26) et une seconde extrémité (98) qui est mobile en réaction à la rotation de la came (46), et
un cliquet (102) couplé à la biellette (90) entre les première (94) et seconde (98) extrémités et en prise avec le rochet (82).

6. Outil de coupe (10) selon la revendication 5, dans lequel :
le mécanisme à cliquet (50) comporte en outre un suiveur (118) couplé pivotant à la seconde extrémité (98) de la biellette (90) et en prise avec la came (46), le suiveur (118) comportant éventuellement un galet (126) en prise avec la came (46) ; et/ou
le cliquet (102) est couplé pivotant à la biellette (90) et mobile entre une première position, dans laquelle le cliquet (102) est en prise avec le rochet (82), et une seconde position, dans laquelle le cliquet (102) est désengagé du rochet (82).

7. Outil de coupe (10) selon la revendication 5, dans lequel le cliquet (102) est un premier cliquet, et dans lequel le mécanisme à cliquet (50) comporte en outre un second cliquet (134) qui est couplé pivotant au carter (12) et est en prise avec le rochet (82).

8. Outil de coupe (10) selon la revendication 7, comprenant en outre un actionneur (146) susceptible de venir en prise avec les premier (102) et second (134) cliquets, l'actionneur (146) étant mobile entre une première position précontrainte dans laquelle les premier (102) et second (134) cliquets ont la possibilité de venir en prise avec le rochet (82), et une seconde position dans laquelle l'actionneur (146) désengage du rochet (82) les premier (102) et second (134) cliquets ; dans lequel :
le mécanisme à cliquet (50) comporte éventuellement en outre un levier (152) couplé pour une rotation conjointe avec le premier cliquet (102), un arbre de support (106) sur lequel le second cliquet (102) est couplé pour une rotation conjointe, et un bras (140) couplé à l'arbre de support (106) pour une rotation conjointe avec l'arbre de support (106) et le second cliquet (134) ; et/ou
l'actionneur (146) comporte éventuellement un premier lobe de came (148) susceptible de venir en prise avec le levier (152), dans la seconde position, et un second lobe de came (156) susceptible de venir en prise avec le bras (140), dans la seconde position ; et/ou
l'outil de coupe (10) comprend en outre une première gâchette (35) permettant d'activer le moteur (34), et une seconde gâchette (160) couplée de manière fonctionnelle à l'actionneur (146) pour faire passer l'actionneur (146) entre les première et seconde positions, la seconde gâchette (160) étant éventuellement prévue à proximité de la première gâchette (35) de manière qu'un utilisateur puisse actionner les première (35) et seconde (160) gâchettes d'une seule main ; et/ou la seconde gâchette (160) est éventuellement susceptible de pivoter entre la première et la seconde position.

9. Outil de coupe (10) selon la revendication 1, comprenant en outre une transmission (38) disposée entre le moteur (34) et la came (46), et dans lequel :
la transmission (38) est éventuellement une transmission à plusieurs modes de vitesse permettant à l'outil de coupe (10) d'offrir au moins un mode à haute vitesse et un mode à basse vitesse ; et/ou
la transmission (38) est éventuellement une transmission planétaire à plusieurs étages, présentant au moins deux étages planétaires (38a, 38b, 38c, 38d), et l'outil de coupe (10) comprend éventuellement en outre un actionneur (52) mobile entre une première position, dans laquelle les deux étages planétaires (38a, 38b, 38c, 38d) sont actifs, et une seconde position, dans laquelle l'un des étages planétaires (38a, 38b, 38c, 38d) est inactif.

10. Outil de coupe (10) selon la revendication 1, comprenant en outre :
un éclairage (206) situé à proximité d'au moins une des lames de coupe (14, 18) pour éclairer une partie d'une pièce à couper ; et/ou
un logement intégré pour outil (228) permettant de conserver un outil à main (230) associé au fonctionnement de l'outil de coupe (10), le logement intégré pour outil (228) étant éventuellement un premier logement pour outil (228) situé sur un premier côté du carter (12), l'outil de coupe (10) comportant en outre un second logement intégré pour outil (228) situé sur un second côté du carter (12).

11. Outil de coupe (10) selon la revendication 9, dans lequel la transmission (38) comporte :
au moins un étage planétaire (38a, 38b, 38c, 38d) présentant une couronne dentée extérieure (43),
un carter de transmission (39) dans lequel est supporté la couronne dentée extérieure (43), et
au moins un butoir en caoutchouc (55) en prise avec la couronne dentée extérieure (43) pour absorber la charge dynamique inverse exercée sur la transmission (38) pendant le fonctionnement de l'outil (10).

12. Outil de coupe (10) selon la revendication 5, dans lequel le mécanisme à cliquet (50) comporte en outre un élément d'arrêt (178) susceptible de venir en prise avec la biellette (90) pour limiter la mesure selon laquelle le rochet (82) et la première lame de coupe (14, 18) peuvent pivoter par rapport au carter (12).

13. Outil de coupe (10) selon la revendication 5, comprenant en outre un arbre de sortie (26) supporté rotatif à l'intérieur du carter (12), l'arbre de sortie (26) comportant une partie cannelée (210) avec laquelle le rochet (82) est en prise, la partie cannelée (210) étant éventuellement de forme asymétrique pour que le rochet (82) puisse être en prise avec cette partie cannelée (210) selon une seule orientation.

14. Outil de coupe (10) selon la revendication 5, dans lequel le rochet (82) est susceptible de tourner dans un premier sens, contre la précontrainte d'un ressort (85), en réaction à l'actionnement du mécanisme à cliquet (50) par le moteur (34).
